# EUROPEAN PATENT SPECIFICATION

(11) **EP 1 677 888 B1**
(45) Date of publication and mention of the grant of the patent: **27.02.2013**
(21) Application number: 04783422.1
(22) Date of filing: 08.09.2004
(51) Int. Cl.: B01D 19/00

(54) **SYSTEM AND METHOD FOR THERMAL MANAGEMENT**
SYSTEM UND VERFAHREN FÜR THERMOMANAGEMENT
SYSTEME ET PROCEDE DE GESTION THERMIQUE

(30) Priority: 08.09.2003 US 657299
(43) Date of publication of application: 12.07.2006
(73) Proprietor: United Technologies Corporation, East Hartford, Connecticut 06108 (US)
(72) Inventor: SPADACCINI, Louis, J., Manchester, CT 06040 (US); KASLUSKY, Scott, F., West Hartford, CT 06119 (US); TILLMAN, Thomas, G., West Hartford, CT 06119 (US); DEVALVE, Timothy, D., Manchester, CT 06040 (US); BERTUCCIOLI, Luca, East Longmeadow, CT 01028 (US); SAHM, Michael, K., Avon, CT 06001 (US); HUANG, He, Glastonbury, CT 06033 (US); BAYT, Robert, L., Hebron, CT 06248 (US); LAMM, Foster, Philip, South Windsor, CT 06074 (US); SABATINO, Daniel, R., East Hampton, CT 06424 (US)
(74) Representative: Leckey, David Herbert
(86) International application number: PCT/US2004/029160
(87) International publication number: WO 2005/025718

(56) References cited:
- EP-A- 1 329 617
- US-A- 4 505 124
- US-A- 4 705 100
- US-A- 5 695 545
- US-A- 5 788 742
- US-A- 6 105 370
- US-A1- 2002 195 385
- US-A1- 2003 129 108
- US-B1- 6 182 435
- US-B1- 6 315 815
- US-B1- 6 315 815
- US-B1- 6 402 818
- US-B1- 6 415 595

## Description

### Technical Field

This invention relates generally to systems, methods, and devices for the management of heat transfer and, more particularly, to systems, methods, and devices for managing the transfer of heat between an energy conversion device and its adjacent environment. A prior art system for managing heat transfer between an energy conversion device and a fuel system, and for deoxygenating the fuel in the fuel system, is described in US 6,315,815 B1.

### Background

Heat management systems for energy conversion devices oftentimes utilize fuels as cooling mediums, particularly on aircraft and other airborne systems where the use of ambient air as a heat sink results in significant performance penalties. In addition, the recovery of waste heat and its re-direction to the fuel stream to heat the fuel results in increased operating efficiency. One of the factors negatively affecting the usable cooling capacity of a particular fuel with regard to such a system is the rate of formation of undesirable oxidative reaction products and their deposit onto the surfaces of fuel system devices. The rate of formation of such products may be dependent at least in part on the amount of dissolved oxygen present within the fuel. The amount of dissolved oxygen present may be due to a variety of factors such as exposure of the fuel to air and more specifically the exposure of the fuel to air during fuel pumping operations. The presence of dissolved oxygen can result in the formation of hydroperoxides that, when heated, form free radicals that polymerize and form high molecular weight oxidative reaction products, which are typically insoluble in the fuel. Such products may be subsequently deposited within the fuel delivery and injection systems, as well as on the other surfaces, of the energy conversion device detrimentally affecting the performance and operation of the energy conversion device. Because the fuels used in energy conversion devices are typically hydrocarbon-based, the deposit comprises carbon and is generally referred to as "coke."

Increasing the temperature of the fuel fed to the energy conversion device increases the rate of the oxidative reaction that occurs. Currently available fuels that have improved resistance to the formation of coke arc generally more expensive or require additives. Fuel additives require additional hardware, on- board delivery systems, and costly supply infrastructure. Furthermore, such currently available fuels having improved resistance to the formation of coke are not always readily available.

### Summary of the Invention

The present invention is directed in one aspect to a system for the management of thermal transfer in a gas turbine engine, as set forth in claim 1.

In another aspect, the present invention provides a method of managing thermal transfer in an aircraft, as set forth in claim 23.

One advantage of the above systems and method is an increase in the exploitable cooling capacity of the fuel. By increasing the exploitable cooling capacity, energy conversion devices are able to operate at increased temperatures while utilizing fuels of lower grades. Operation of the devices at increased temperatures provides a greater opportunity for the recovery of waste heat from heat generating components of the system. The recovery of waste heat, in turn, reduces fuel consumption costs associated with operation of the device because combustion of pre-heated fuel requires less energy input than combustion of unheated fuel. Increased cooling capacity (and thus high operating temperatures, recovery of waste heat, and reduced fuel consumption) also increases the overall efficiency of operating the device.

Another advantage is a reduction in coke formation within the energy conversion device. Decreasing the amount of dissolved oxygen present within the fuel as the temperature is increased retards the rate of oxidative reaction, which in turn reduces the formation of coke and its deposition on the surfaces of the energy conversion device, thereby reducing the maintenance requirements. Complete or partial deoxygenation of the fuel suppresses the coke formation across various aircraft fuel grades. A reduction in the amount of oxygen dissolved within the fuel decreases the rate of coke deposition and correspondingly increases the maximum allowable temperature sustainable by the fuel during operation of the energy conversion device. In other words, when lower amounts of dissolved oxygen are present within a fuel, more thermal energy can be absorbed by the fuel, thereby resulting in operations of the energy conversion device at higher fuel temperatures before coke deposition in the energy conversion device becomes undesirable.

Operational advantages to pre-heating the fuel to temperatures that prevent, limit, or minimize coke formation prior to entry of the fuel into the FSU also exist. In particular, oxygen solubility in the fuel, diffusivity of oxygen in the fuel, and diffusivity of oxygen through the membrane increase with increasing temperature. Thus, FSU performance may be increased by pre-heating the fuel. This may result in either a reduction in FSU volume (size and weight reductions) or increased FSU performance, which may result in further reductions in the fuel oxygen levels exiting the FSU. Furthermore, the reduction in FSU volume may further allow system design freedom in placement of the FSU within the fuel system (either upstream- or downstream of low-grade heat loads) and in the ability to cascade the heat loads and fuel system heat transfer hardware.

### Brief Description of the Drawings

FIG. 1 is a schematic representation of a system for the management of heat transfer between an energy conversion device and a fuel system.
FIG. 2 is a schematic representation of a fuel stabilization unit showing a fuel inlet.
FIG. 3 is a schematic representation of the fuel stabilization unit showing a fuel outlet and an oxygen outlet.
FIG. 4 is a cross sectional view of an assembly of a flow plate, permeable composite membranes, and porous substrates that comprise the fuel stabilization unit.
FIG. 5 is a schematic representation of a fuel passage defined by the flow plate.
FIG. 6 is an alternate embodiments of a fuel passage defined by the flow plate.
FIG. 7 is an exploded view of a flow plate/membrane/substrate assembly.
FIG. 8 is a system for the management of heat transfer in which a high temperature heat source is a high temperature oil system.
FIG. 9 is a system for the management of heat transfer in which a high temperature heat source is a cooled turbine cooling air unit.
FIG. 10 is a system for the management of heat transfer in which a high temperature heat source is a turbine exhaust recuperator.
FIG. 11 is a system for the management of heat transfer in which a high temperature heat source is a fuel-cooled environmental control system precooler.
FIG. 12 is a system for the management of heat transfer in which a high temperature heat source is an integrated air cycle environmental control system.
FIG. 13 is a system for the management of heat transfer in which a high temperature heat source is a heat pump.

### Detailed Description

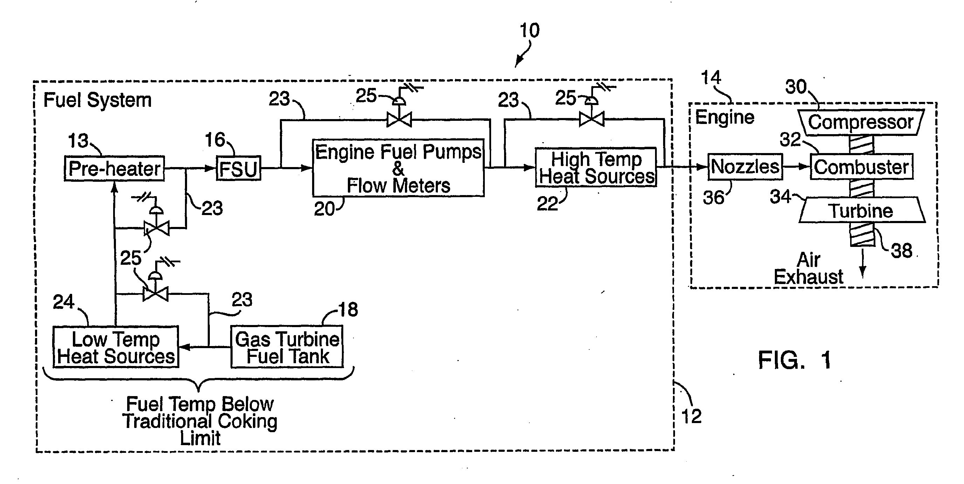

Referring to FIG. 1, a system for the management of heat transfer is shown generally at 10 and is hereinafter referred to as "system 10." As used herein, the term "management of heat transfer" is intended to indicate the control of heat transfer by regulation of various chemical- and physical parameters of associated sub-systems and work cycles. The sub-systems include, but are not limited to, fuel systems that provide a hydrocarbon-based fuel to the work cycle. The work cycle may be an energy conversion device. Although the system 10 is hereinafter described as being a component of an aircraft, it should be understood that the system 10 has relevance to other applications, e.g., utility power generation, land-based transport systems, marine- and fresh-water based transport systems, industrial equipment systems, and the like. Furthermore, it should be understood that the term "aircraft" includes all types of winged aircraft, rotorcraft, winged-and rotor hybrids, spacecraft, drones and other unmanned craft, weapons delivery systems, and the like.

In one embodiment of the system 10, a fuel system 12 includes a fuel stabilization unit (FSU) 16 that receives fuel from a fuel source 18 and provides the fuel to the energy conversion device (hereinafter "engine 14"). Various heat generating sub-systems (e.g., low temperature heat sources 24, pumps and metering systems 20, high temperature heat sources 22, combinations of the foregoing sources and systems, and the like), which effect the thermal communication between various components of the system 10 during operation, are integrated into the fuel system 12 by being disposed in thermal communication with the fuel either upstream or downstream from the FSU 16. A fuel pre-heater 13 may further be disposed in the fuel system 12 prior to the FSU 16 to increase the temperature of the fuel received into the FSU 16. Selectively-actuatable fuel line bypasses 23 having valves 25 are preferably disposed in the fuel system 12 to provide for the bypass of fuel around the various sub-systems and particularly the high temperature heat sources 22.

The engine 14 is disposed in operable communication with the various heat generating sub-systems and preferably comprises a gas turbine engine having a compressor 30, a combustor 32, and a turbine 34. Fuel from the fuel system 12 is injected into the combustor 32 through fuel injection nozzles 36 and ignited. An output shaft 38 of the engine 14 provides output power that drives a plurality of blades that propel the aircraft.

Operation of the system 10 with the FSU 16 allows for the control of heat generated by the various sources and systems to provide benefits and advantages as described above. The temperature at which coke begins to form in the fuel is about 260 degrees F. Operation of the engine 14 (e.g., a gas turbine engine) at fuel temperatures of up to about 325 degrees F generally produces an amount of coke buildup that is acceptable for most military applications. Operation of the system 10 with the FSU 16 to obtain a reduction in oxygen content of the fuel, however, enables the engine 14 to be operated at fuel temperatures greater than about 325 degrees F, preferably greater than about 550 degrees F, and more preferably about 700 degrees F to about 800 degrees F with no significant coking effects. The upper limit of operation is about 900 degrees F, which is approximately the temperature at which the fuel pyrolizes.

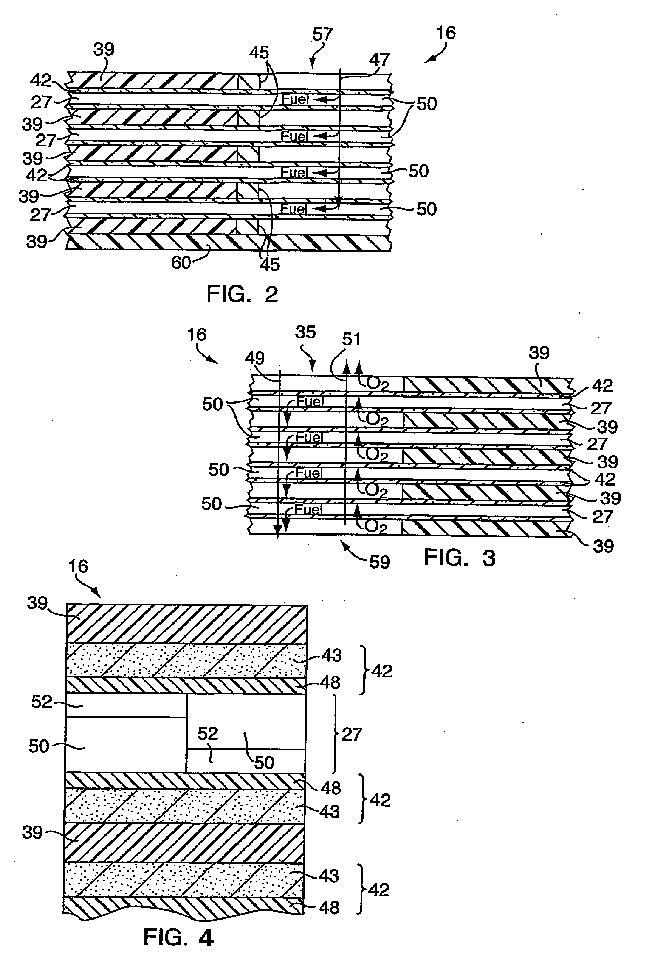

Referring now to FIGS. 2-7, the FSU 16 is shown. The FSU 16 is a fuel deoxygenating device that receives fuel either directly or indirectly from the fuel source. Upon operation of the FSU 16, the amount of dissolved oxygen in the fuel is reduced to provide deoxygenated fuel. As used herein, the term "deoxygenated fuel" is intended to indicate fuel having reduced oxygen content relative to that of fuel in equilibrium with ambient air. The oxygen content of fuel in equilibrium with ambient air is about 70 parts per million (ppm). Depending upon the specific application of the FSU 16 (e.g., the operating temperatures of the system 10 of FIG. 1), the oxygen content of deoxygenated fuel may be about 5 ppm or, for applications in which operating temperatures approach about 900 degrees F, less than about 5 ppm. A reduction in the amount of dissolved oxygen in the fuel enables the fuel to absorb an increased amount of thermal energy while reducing the propagation of free radicals that form insoluble reaction products, thereby allowing the fuel to be substantially coke-free. As used herein, the term "substantially coke-free" is intended to indicate a fuel that, when used to operate an engine at elevated temperatures, deposits coke at a rate that enables the maintenance and/or overhaul schedules of the various apparatuses into which the FSU 16 is incorporated to be extended.

The FSU 16 includes an assembly of flow plates 27, permeable composite membranes 42, and porous substrates 39. The flow plates 27, the permeable composite membranes 42, and the porous substrates 39 are preferably arranged in a stack such that the permeable composite membranes 42 are disposed in interfacial engagement with the flow plates 27 and such that the porous substrates 39 are disposed in interfacial engagement with the permeable composite membranes 42. The flow plates 27 are structured to define passages 50 through which the fuel flows.

The assembly of flow plates 27 is mounted within a vacuum housing 60. Vacuum is applied to the vacuum housing 60 to create an oxygen partial pressure differential across the permeable composite membranes 42, thereby causing the migration of dissolved oxygen from the fuel flowing through the assembly of flow plates 27 and to an oxygen outlet 35. The source of the partial pressure differential vacuum may be a vacuum pump, an oxygen-free circulating gas, or the like. In the case of an oxygen-free circulating gas, a strip gas (e.g., nitrogen) is circulated through the FSU 16 to create the oxygen pressure differential to aspirate the oxygen from the fuel, and a sorbent or filter or the like is disposed within the circuit to remove the oxygen from the strip gas.

Referring specifically to FIG. 2, an inlet 57 of the FSU 16 is shown. Fuel entering the FSU 16 flows from the inlet 57 in the direction indicated by an arrow 47 and is dispersed into each of the passages 50. Seals 45 between the stacked flow plates 27 prevent the fuel from contacting and flowing into the porous substrates 39.

Referring specifically to FIG. 3, outlets of the FSU 16 are shown. Oxygen removed through the porous substrates 39 is removed through an oxygen outlet 35 via the vacuum source, as is indicated by an arrow 51. Deoxygenated fuel flowing through the flow plates 27 is removed through a fuel outlet 59, as is indicated by an arrow 49, and directed to one or several downstream sub-systems (e.g., pumps and metering systems, high temperature heat sources, and the like) and to the engine.

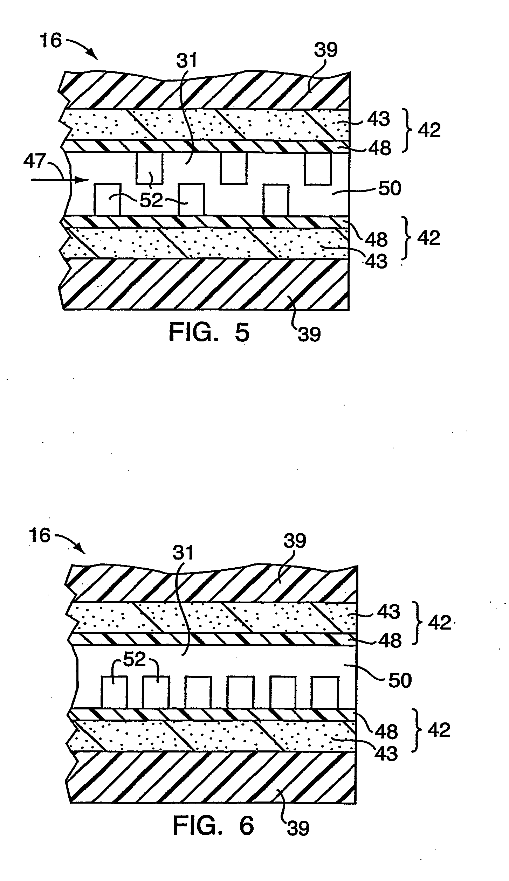

Referring now to FIG. 4, the assembly of flow plates 27, permeable composite membranes 42, and porous substrates 39 is shown. As stated above, the FSU 16 comprises an assembly of interfacially-engaged flow plates 27, permeable composite membranes 42, and porous substrates 39. The flow plates 27, described below with reference to FIG. 5, comprise planar structures that define the passages 50 through which the fuel is made to flow. The permeable composite membranes 42 preferably comprise fluoropolymer coatings 48 supported by porous backings 43, which are in turn supported against the flow plates 27 by the porous substrates 39. The application of vacuum to the assembly creates the partial pressure gradient that draws dissolved oxygen from the fuel in passages 50 through the permeable composite membranes 42 (in particular, through the fluoropolymer coatings 48, through the porous backings 43, and through the porous substrates 39) and out to the oxygen outlet 35.

The permeable composite membrane 42 is defined by an amorphous fluoropolymer coating 48 supported on the porous backing 43. The fluoropolymer coating 48 preferably derives from a polytetrafluoroethylene (PTFE) family of coatings and is deposited on.the porous backing 43 to a thickness of about 0.5 micrometers to about 20 micrometers, preferably about 2 micrometers to about 10 micrometers, and more preferably about 2 micrometers to about 5 micrometers. The porous backing 43 preferably comprises a polyvinylidene difluoride (PVDF) or polyetherimide (PEI) substrate having a thickness of about 0.001inches to about 0.02 inches, preferably about 0.002 inches to about 0.01 inches, and more preferably about 0.005 inches. The porosity of the porous backing 43 is greater than about 40% open space and preferably greater than about 50% open space. The nominal pore size of the pores of the porous backing 43 is less than about 0.25 micrometers, preferably less than about 0.2 micrometers, and more preferably less than about 0.1 micrometers. Amorphous polytetrafluoroethylene is available under the trade name Teflon AF® from DuPont located in Wilmington, Delaware. Other fluoropolymers usable as the fluoropolymer coating 48 include, but are not limited to, perfluorinated glassy polymers and polyperfluorobutenyl vinyl ether. Polyvinylidene difluoride is available under the trade name Kynar® from Atofina Chemicals, Inc. located in Philadelphia, Pennsylvania.

The porous substrate 39 comprises a lightweight plastic material (e.g., PVDF, PEI, polyethylene, or the like) that is compatible with hydrocarbon-based fuel. Such material is of a selected porosity that enables the applied vacuum to create a suitable oxygen partial pressure differential across the permeable composite membrane 42. The pore size, porosity, and thickness of the porous substrate 39 are determined by the oxygen mass flux requirement, which is a function of the mass flow rate of fuel. In a porous substrate 39 fabricated from polyethylene, the substrate is about 0.03 inches to about 0.09 inches in thickness, preferably about 0.04 inches to about 0.085 inches in thickness, and more preferably about 0.070 inches to about 0.080 inches in thickness. Alternatively, the porous substrate may comprise a woven plastic mesh or screen, a thinner and lighter vacuum permeate having a thickness of about 0.01 inches to about 0.03 inches.

Referring now to FIGS. 5 and 6, the flow plates 27 comprise planar structures having channels, one of which is shown at 31, and ribs or baffles 52 arranged in the channels 31 to form a structure that, when assembled with the permeable composite membranes 42, define the passages 50. The baffles 52 are disposed across the channels 31. The passages 50 are in fluid communication with the inlet 57 and the outlet 59. The vacuum is in communication with the porous substrates 39 through the oxygen outlet 35 (FIG. 3).

The baffles 52 disposed within the passages 50 promote mixing of the fuel such that significant portions of the fuel contact the fluoropolymer coating 48 during passage through the FSU 16 to allow for diffusion of dissolved oxygen from the fuel. Because increased pressure differentials across the passages are generally less advantageous than lower pressure differentials, the baffles 52 are preferably configured to provide laminar flow and, consequently, lower levels of mixing (as opposed to turbulent flow) through the passages 50. Turbulent flow may, on the other hand, be preferred in spite of its attendant pressure drop when it provides the desired level of mixing and an acceptable pressure loss. Turbulent channel flow, although possessing a higher pressure drop than laminar flow, may promote sufficient mixing and enhanced oxygen transport such that the baffles may be reduced in size or number or eliminated altogether. The baffles 52 extend at least partially across the passages 50 relative to the direction of fuel flow to cause the fuel to mix and to contact the fluoropolymer coating 48 in a uniform manner while flowing through the flow plates 27.

Referring to FIG. 5, in operation, fuel flowing through the passages 50 of the flow plate in the direction of the arrow 47 is caused to mix by the baffles 52 and contact the fluoropolymer coating 48. As shown, the baffles 52 are alternately disposed at the upper and lower faces of the flow plate. In this embodiment, the baffles 52 induce vertical (upwards and downwards) velocity components that enhance mass transport and effectively increase the oxygen diffusivity in the fuel. This increases the oxygen/fluoropolymer contact, and thus the amount of oxygen removed from the FSU. Fuel flowing over the baffles 52 is encouraged to mix such that the fuel more uniformly contacts the fluoropolymer coating 48 to provide for a more uniform diffusion through the porous backing 43 and into the porous substrate 39 and out of the FSU. Referring to FIG. 6, another embodiment of the flow plate is shown including baffles 52 arranged at one side of the flow plate. It should be understood that it is within the contemplation of this invention to include any configuration of baffles 52 or mixing enhancers, including, but not limited to, inertial devices, mechanical devices, acoustic devices, or the like, to induce either a turbulent flow regime or a laminar flow regime to attain the desired amount of mixing and/or mass transport according to application-specific parameters.

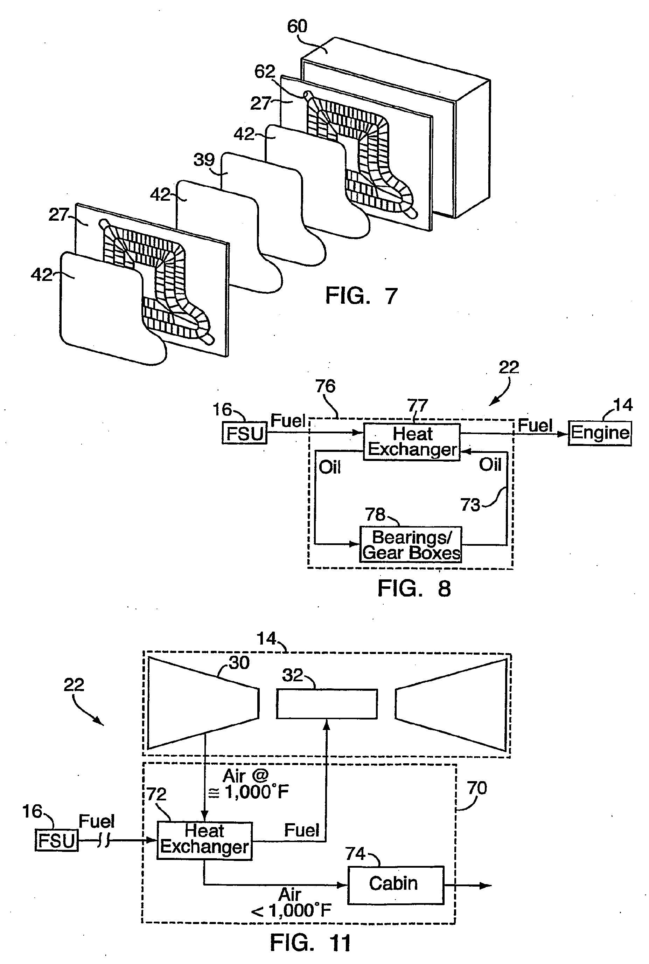

Referring to FIG. 7, one exemplary embodiment of a stack of flow plates 27 is shown. The flow plates 27 are preferably rectangularly-shaped to facilitate the scaling of the FSU for various applications by the adjustment of the number of flow plates 27. Alternately, the flow plates 27 may also be circular in structure, thereby providing increased structural integrity to the stacked arrangement. Regardless of the shape of the flow plates 27, the stack is supported within the vacuum frame 60 that includes an inlet 62 that defines the vacuum opening to provide vacuum communication with the porous substrates 39.

Referring now to FIGS. 2-7, the specific quantity of flow plates 27, permeable composite membranes 42, and porous substrates 39 for use with the FSU 16 are determined by the application-specific requirements of the system 10, such as fuel type, fuel temperature, and mass flow demand from the engine. Further, different fuels containing differing amounts of dissolved oxygen may require differing amounts of filtering to remove a desired amount of dissolved oxygen to provide for optimization of the operation of the system 10 and for optimum thermal management of the system 10.

Performance of the FSU 16 is related to permeability of the permeable composite membrane 42 and the rate of diffusion of oxygen therethrough. The permeability of the permeable composite membrane 42 is a function of the solubility of oxygen in the fluoropolymer coating 48 and the transfer of the oxygen through the porous backing 43. The permeable composite membrane 42 (the combination of the fluoropolymer coating 48 and the porous backing 43) is of a selected thickness to allow for the desired diffusion of dissolved oxygen from the fuel to the porous substrate 39 for specific applications of vacuum or strip gas (e.g., nitrogen).

The rate of diffusion of oxygen from the fuel through the surface of the permeable composite membrane 42 is affected by the duration of contact of fuel with the permeable composite membrane 42 and the partial pressure differential across the permeable composite membrane 42. It is desirable to maintain a steady application of vacuum on the FSU 16 and constant contact between the permeable composite membrane 42 and fuel in order to maximize the amount of oxygen removed from the fuel. Optimizing the diffusion of dissolved oxygen involves balancing the fuel flow, fuel temperature, vacuum level, and the amount of mixing/transport, as well as accounting for minimizing pressure loss and accounting for manufacturing tolerances and operating costs.

Referring back to FIG. 1, the fuel source 18 may comprise a plurality of vessels from which the fuel can be selectively drawn. In winged aircraft, such vessels may be irregularly-shaped so as to be accommodated in the wings of the aircraft. Each vessel is disposed in fluid communication with a pump, which may be manually or automatically controlled to selectively draw fuel from either or both of the vessels and to pump the fuel to the FSU 16.

Still referring back to FIG. 1, one aspect of the thermal management of the system 10 may be embodied in the transfer of heat between fuel stored in the fuel source 18 and at least one of the low temperature heat sources 24. In particular, because the low temperature heat sources 24 are below the coking limit of the fuel, the fuel flowing from the fuel source 18 may function as a low-grade heat sink to absorb heat from some or all of the low temperature heat sources 24. Such low temperature heat sources 24 include, but are not limited to, hydraulic heat loads, generator heat loads, engine accessory gear box heat loads, fuel pump heat loads, fan drive gear system heat loads, and engine oil system loads. The fuel flowing from the fuel source 18 may be circulated to any one or a combination of such loads for the exchange of heat therewith. The amount of heat absorbable by the fuel is such that the temperature of the fuel therein is maintained at less than the temperature limit at which fuel can be received into the FSU 16.

Referring now to FIGS. 1 and 8-13, the management of heat transfer between the fuel and the various high temperature heat sources 22 is shown. In FIG. 8, the high temperature heat source 22 may comprise a high temperature oil system 76. The high temperature oil system 76 includes a heat exchanger 77 configured to transfer heat from an oil stream 73 received from at least one bearing and/or gearing arrangement 78 to the deoxygenated fuel from the FSU 16. Accordingly, the temperature of the bearing and/or gearing arrangement 78 is reduced considerably, and the temperature of the fuel stream from the heat exchanger 77 is increased to a temperature near that of the maximum oil temperature and greater than the coking limit of about 325 degrees F but less than the temperature at which pyrolysis occurs (about 900 degrees F).

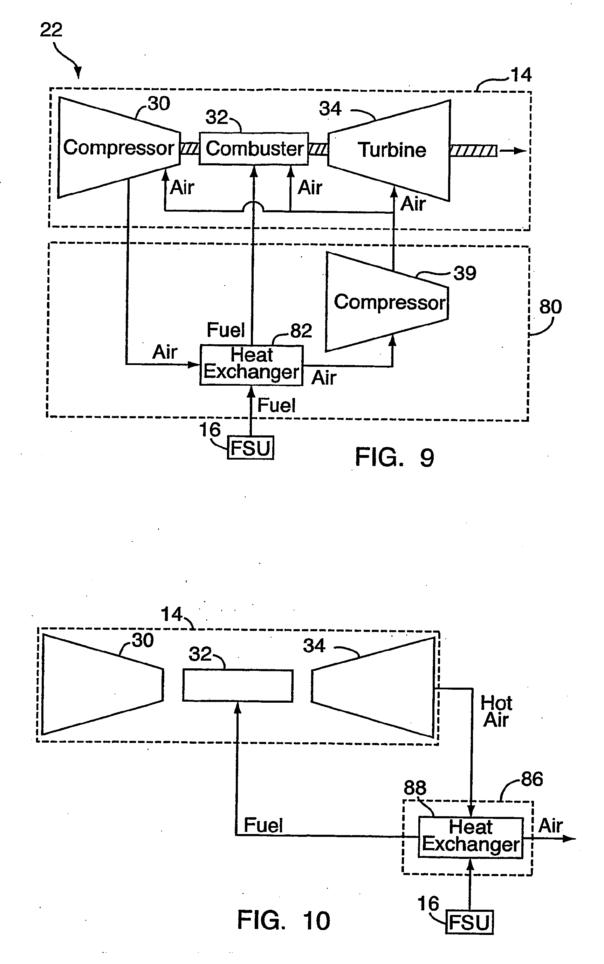

The high temperature heat source 22 may further comprise a cooled turbine cooling air unit 80, as is shown with reference to FIG. 9. The cooled turbine cooling air unit 80 effects the heat transfer between the deoxygenated fuel from the FSU 16 and the engine 14 by receiving an air stream at a temperature of about 1,200 degrees F from the compressor 30 of the engine 14 and the deoxygenated fuel stream from the FSU 16. Heat is transferred between the received air stream and the fuel stream, thus heating the deoxygenated fuel and cooling the air. The temperature of the heated fuel is greater than the coking limit of about 325 degrees F and less than the temperature at which pyrolysis occurs (about 900 degrees F). In particular, the temperature of the heated fuel is preferably about 700 degrees F to about 800 degrees F. The heated fuel is directed to the combustor 32, and the cooled air is directed to a compressor 39. The low temperature outlet stream from the compressor 39 is split into three streams and directed back to the compressor 30, combustor 32, and the turbine 34. Upon directing the cooled air to the compressor 30, the combustor 32, and the turbine 34, a buffer layer of cool air is received at the surfaces of these three components, thereby allowing the gases flowing through the compressor 30, the combustor 32, and the turbine 34 to be of higher temperatures.

The high temperature heat source 22 may comprise a turbine exhaust recuperator 86, as is shown with reference to FIG. 10. The turbine exhaust recuperator 86 provides for the management of heat transfer by utilizing hot gases exhausted from the turbine 34 to heat the fuel directed to the combustor 32. Upon operation of the turbine exhaust recuperator 86, turbine exhaust at about 1,200 degrees F is directed to a heat exchanger 88 and used to heat the deoxygenated fuel received from the FSU 16. Upon such a heat exchange, cooled exhaust is ejected from the heat exchanger 88. The heated fuel is directed to the combustor 32. The temperature of the fuel directed to the combustor 32 is at least about 550 degrees F, preferably about 550 degrees F to about 900 degrees F, and more preferably about 700 degrees F to about 800 degrees F.

Two similar applications to the turbine exhaust recuperator are a fuel-cooled engine case and a fuel-cooled engine exhaust nozzle. Both of these represent high temperature heat sources similar to the turbine exhaust recuperator. In these applications, compact fuel heat exchangers, coils, or jackets are wrapped around either the engine case or the exhaust nozzle to transfer heat from these sources either directly to the fuel or first to an intermediate coolant and then from the intermediate coolant to the fuel. The heated fuel is then directed to the combustor 32.

In FIG. 11, the high temperature heat source may be a fuel-cooled precooler 70, which is most often incorporated into an aircraft, and which is hereinafter referred to as "precooler 70." The precooler 70 comprises a heat exchanger 72 that receives an air stream at a temperature of about 1,000 degrees F from the compressor 30 of the engine 14 and fuel from the FSU 16. Heat is transferred between the incoming air streams and fuel streams to provide an outlet air stream at a temperature of about 450 degrees F and an outlet fuel stream at a temperature of up to about 900 degrees F and preferably about 400 degrees F to about 800 degrees F. The outlet air stream is directed onto the aircraft to provide one or more pneumatic services. The outlet air stream may be utilized to power an environmental control system to provide pressurized cooling air to a cabin 74 of the aircraft. Alternately, or additionally, the air stream may be routed through various airframe structures (e.g., wings and fuselage walls) to provide one or more thermal functions such as de-icing operations and the like. The outlet fuel stream is directed to the combustor 32.

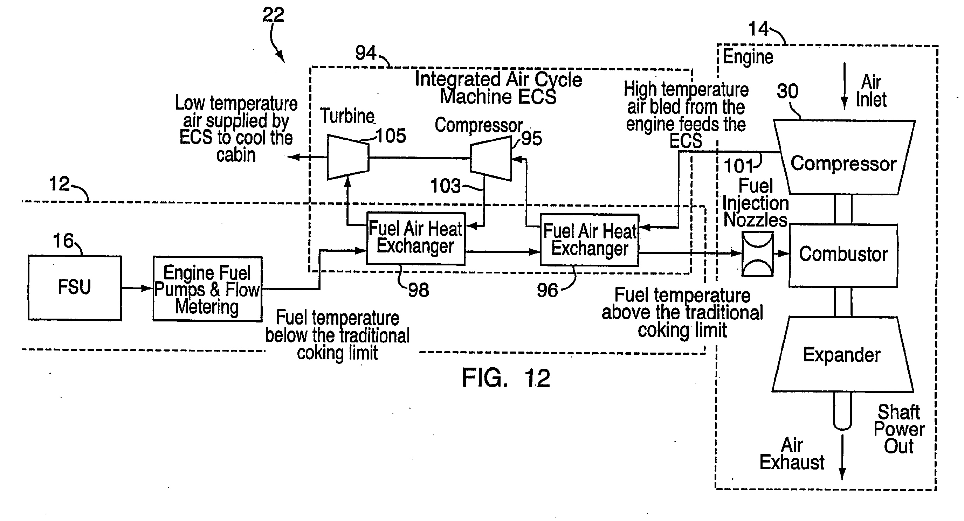

Referring to FIG.12, the high temperature heat source 22 may comprise an integrated air cycle environmental control system 94 (hereinafter referred to as IACECS 94"). The IACECS 94, which is a variation of the fuel-cooled ECS precooler 70 described above with reference to FIG. 11, functions as a heat sink to the aircraft cabin ECS. The IACECS 94 include a first fuel/air heat exchanger 96 disposed in serial fluid communication with a second fuel/air heat exchanger 98. The first fuel/air heat exchanger 96 receives a high temperature (about 1,000 degrees F) air stream 101 bled from the compressor 30 of the engine 14 and the fuel stream from the FSU 16. Upon the exchange of heat, fuel at at least about 325 degrees F, preferably about 550 degrees F to about 900 degrees F, and more preferably about 700 degrees F to about 800 degrees F is directed to the combustor 32. Cooled air ejected from the first fuel/air heat exchanger 96 is directed to a compressor 95 of the IACECS 94. Heat from an air bleed stream 103 from the compressor 95 is then exchanged with the fuel stream from the FSU 16, and heated fuel is directed to the first fuel/air heat exchanger 96 while cooled air is directed to a turbine 105 of the IACECS 94 where it is expanded resulting in low temperature air at the desired cabin pressure. The low temperature air is then received from the turbine 105 and directed to the cabin.

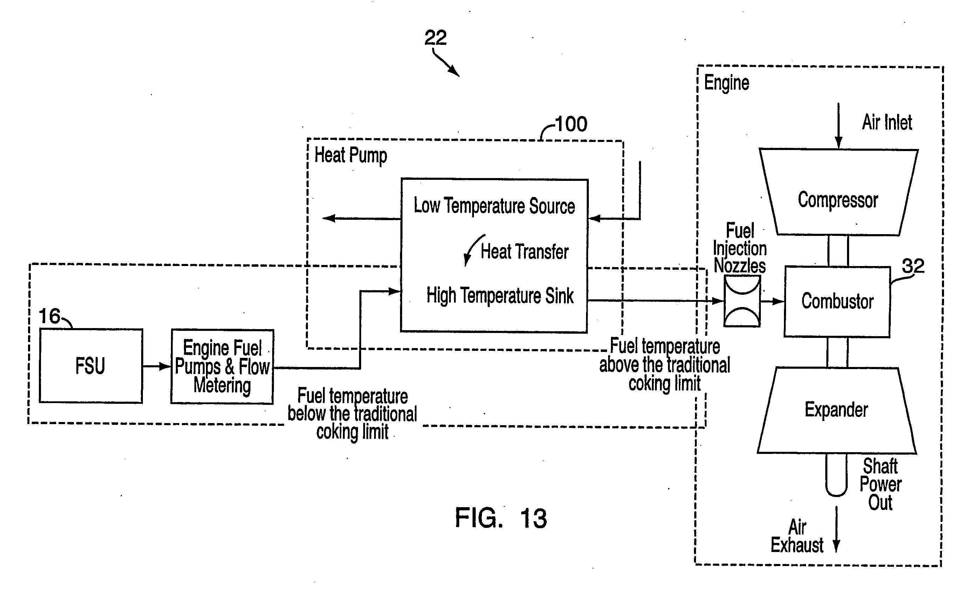

Referring now to FIG.13, another high temperature heat source 22 for an aircraft application may comprise a heat pump 100. The heat pump 100 transfers heat from a low temperature source to the deoxygenated fuel that acts as a high temperature heat sink. Because the heat transfer occurs from the low temperature source to the deoxygenated fuel, the heat pump 100 enables the transfer of heat to the deoxygenated fuel from a heat source at a lower temperature to the fuel heat sink at a higher temperature. The fuel discharged from the heat pump 100, which is at a temperature of up to about 900 degrees F, is directed to the combustor 32.

Referring now to all of the Figures, as indicated from the above disclosure, the system 10 provides for the management of heat transfer between the engine 14 and various other associated components of the system 10 via the regulation of various parameters, namely, the oxygen content of the fuel fed to the engine 14 and the temperature of the fuel into the engine 14. Regulation of such parameters results in improved thermodynamic efficiency of the engine.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims.

## Claims

1. A system (10) for the management of thermal transfer in a gas turbine engine (14), said system (10) comprising:
a heat generating sub-system (20, 22, 24) disposed in operable communication with said engine (14);
a fuel source (18) configured to supply a fuel;
a fuel stabilization unit (16) configured to receive said fuel from said fuel source (18) and to provide said fuel to said engine (14); and
a heat exchanger (72, 77, 82, 88, 96, 98) disposed in thermal communication with said fuel to effect the transfer of heat from said heat generating sub-system (22) to said fuel;
**characterised in that** said fuel stabilization unit (16) comprises,
a flow plate (27) having channels (31) disposed in a planar structure thereof, said channels (31) being configured to accommodate a flow of said fuel, and
a membrane (42) disposed in interfacial engagement with said flow plate (27), said membrane (42) being configured to receive a flow of oxygen drawn from said fuel therethrough.

2. The system (10) of clam 1, wherein said fuel stabilization unit (16) is upstream of said heat generating sub-system (20, 22).

3. The system (10) of claim 1, wherein said fuel stabilization unit (16) is downstream of said heat generating sub-system (24).

4. The system (10) of any preceding claim, wherein said fuel supplied to said engine (14) is at a temperature of greater than about 163°C (325 degrees F).

5. The system (10) of any preceding claim, wherein said fuel supplied to said engine (14) is at a temperature of about 288 °C (550 degrees F) to about 482 °C (900 degrees F).

6. The system (10) of any preceding claim, wherein said fuel supplied to said engine (14) is at a temperature of about 371 °C (700 degrees F) to about 427 °C (800 degrees F).

7. The system (10) of any preceding claim, wherein said heat generating sub-system (22) is selected from the group of heat generating sub-systems consisting of a high temperature oil system (76), a cooled turbine cooling air unit (80), a turbine exhaust recuperator (86), a fuel-cooled exhaust nozzle, a fuel-cooled engine case, a fuel-cooled environmental control system precooler (70), a heat pump (100), and combinations of the foregoing heat generating sub-systems.

8. The system (10) of claim 7, wherein said high temperature oil system (76) comprises a heat exchanger (77) configured to receive an oil stream (73) from a bearing and/or gearing arrangement (78) and said fuel from said fuel stabilization unit (16), said heat exchanger (77) being configured to effect the transfer of heat from said oil stream (73) to said fuel.

9. The system (10) of claim 7 or 8, wherein said cooled turbine cooling air unit (80) comprises a heat exchanger (82) configured to receive an air stream from said engine (14) and said fuel from said fuel stabilization unit (16), said heat exchanger (82) being configured to effect the transfer of heat from said air stream to said fuel.

10. The system (10) of claim 7, 8 or 9, wherein said turbine exhaust recuperator (86) comprises a heat exchanger (88) configured to receive an air stream exhausted from a turbine (34) of said engine (14) and said fuel from said fuel stabilization unit (16), said heat exchanger (88) being configured to effect the transfer of heat from said air stream exhausted from said turbine (34) to said fuel.

11. The system (10) of any preceding claim, wherein said gas turbine engine (14) is incorporated into an aircraft.

12. The system (10) of any preceding claim, further comprising baffles (52) disposed in said channels (31) to facilitate the mixing of fuel in said flow plate (27).

13. The system of claim 12, wherein said mixing of fuel is effected in a turbulent flow regime.

14. The system of claim 12, wherein said mixing of fuel is effected in a laminar flow regime.

15. The system of any preceding claim, wherein said membrane (42) comprises a fluoropolymer coating disposed on a porous backing.

16. The system of any preceding claim, further comprising a porous substrate (39) disposed in interfacial engagement with said membrane (42).

17. The system (10) of any preceding claim, further comprising a selectively-actuatable fuel bypass (23) disposed around said heat generating sub-system (20, 22, 24), said selectively-actuatable fuel bypass (23) being configured to effect the bypass of fuel around said heat generating sub-system (20, 22, 24),

18. The system (10) of any of claims 7 to 10, wherein said fuel-cooled environmental control system precooler (70) comprises a heat exchanger (72) configured to receive an air stream from said aircraft engine (14) and said fuel from said fuel stabilization unit (16), said heat exchanger (72) being configured to effect the transfer of heat from said air stream to said fuel.

19. The system (10) of any of claims 7 to 10 or 18, wherein said heat pump (100) is configured to transfer heat from a low temperature source (24) to said fuel from said fuel stabilization unit (16).

20. The system (10) of any of claims 7 to 10, 18 or 19, wherein said fuel-cooled engine case comprises a device disposed in communication with said engine case to transfer heat to said fuel, said device being selected from the group of devices consisting of fuel heat exchangers, coils, and jackets.

21. The system (10) of any of claims 7 to 10, 18, 19 or 20, wherein said fuel-cooled exhaust nozzle comprises a device disposed in communication with said exhaust nozzle to transfer heat to said fuel, said device being selected from the group of devices consisting of fuel heat exchangers, coils, and jackets.

22. The system (10) of any preceding claim, further comprising a pre-heater (13) configured to heat said fuel supplied to said fuel stabilization unit (16).

23. A method of managing thermal transfer in an aircraft, said method comprising:
using a fuel stabilization unit (16) to remove oxygen from a stream of a fuel fed to an engine (14) used to drive said aircraft, wherein said fuel stabilization unit (16) comprises,
a flow plate (27) having channels (31) disposed in a planar structure thereof, said channels (31) being configured to accommodate a flow of said fuel, and
a membrane (42) disposed in interfacial engagement with said flow plate (27), said membrane (42) being configured to receive a flow of oxygen drawn from said fuel therethrough;
transferring heat from a heat generating sub-system (20, 22, 24) of said aircraft to said fuel; and
combusting said fuel.

24. The method of claim 23, wherein said removing oxygen from said stream of said fuel comprises,
directing said fuel to a surface of said membrane (42), wherein said membrane is a permeable membrane,
applying a vacuum across said permeable membrane (42) to create a partial pressure differential, and
causing diffused oxygen dissolved within said fuel to migrate through said permeable membrane (42).

25. The method of claim 23 or 24, wherein said transferring of heat comprises,
receiving a compressed air stream from a compressor (30) of said engine (14) into a heat exchanger (72, 82), and
receiving said fuel into said heat exchanger (72, 82) such that heat is transferred from said compressed air stream to said fuel.

26. The method of claim 25, further comprising directing said compressed air stream from said heat exchanger (72) to a cabin (74) of said aircraft.

27. The method of claim 25, further comprising directing said compressed air stream from said heat exchanger (82) to a turbine (34) of said engine (14).

28. The method of claim 23 or 24, wherein said transferring of heat comprises,
receiving an air stream from a turbine (34) of said engine (14) into a heat exchanger (88), and
receiving said fuel into said heat exchanger (88) such that heat is transferred from said air stream from said turbine (34) to said fuel.

29. The method of claim 23, wherein said transferring of heat comprises,
receiving a high temperature oil stream (73) from a high temperature oil system (78) into a heat exchanger (77), and
receiving said fuel into said heat exchanger (77) such that heat is transferred from said high temperature oil system (78) to said fuel.

30. The method of claim 29, wherein said high temperature oil system (78) is a bearing and/or gearing arrangement.

31. The method of any of claim 23 to 30, wherein said combusting said fuel comprises,
heating said fuel to at least about 288 °C (550 degrees F),
injecting said heated fuel into said engine (14) through a fuel injection nozzle (36), and
igniting said heated fuel.

32. The method of any of claims 23 to 31, wherein said combusting said fuel comprises,
heating said fuel to about 288 °C (550 degrees F) to about 482 °C (900 degrees F),
injecting said heated fuel into said engine (14) through a fuel injection nozzle (36), and
igniting said heated fuel.

33. The method of any of claim 23 to 32, wherein said combusting said fuel comprises,
heating said fuel to about 371 °C (700 degrees F) to about 427 °C (800 degrees F),
injecting said heated fuel into said engine (14) through a fuel injection nozzle (36), and
igniting said heated fuel.

34. The method of any of claims 23 to 33 further comprising pre-heating said stream of fuel prior to said removing oxygen from said stream of fuel.

## Patentansprüche

1. System (10) zum Wärmeübertragungsmanagement in einer Gasturbinenmaschine (14), wobei das System (10) aufweist:
ein wärmeerzeugendes Teilsystem (20, 22, 24), welches in betreibbarer Kommunikation mit der Maschine (14) angeordnet ist;
eine Treibstoffquelle (16), die konfiguriert ist, einen Treibstoff zu liefern;
eine Treibstoffstabilisierungseinheit (16), die konfiguriert ist, den Treibstoff von der Treibstoffquelle (18) aufzunehmen und den Treibstoff an die Maschine (14) bereitzustellen; und
einen Wärmetauscher (70, 77, 82, 88, 96, 98), der in thermischer Verbindung mit dem Treibstoff angeordnet ist, um die Übertragung von Wärme von dem wärmeerzeugenden Teilsystem (22) auf den Treibstoff zu bewirken;
**dadurch gekennzeichnet, dass** die Treibstoffstabilisierungseinheit (16) aufweist,
eine Strömungsplatte (27) mit Kanälen (31), die in einer ebenflächigen Struktur davon angeordnet sind, wobei die Kanäle (31) konfiguriert sind, um einen Strom des Treibstoffs aufzunehmen, und
eine Membran (42), die in Grenzflächenkontakt mit der Strömungsplatte (27) angeordnet ist, wobei die Membran (42) konfiguriert ist, einen Sauerstoffstrom aufzunehmen, der durch sie aus dem Treibstoff gezogen wird.

2. System (10) gemäß Anspruch 1, wobei die Treibstoffstabilisierungseinheit (16) stromaufwärts von dem wärmeerzeugenden Teilsystem (20, 22) liegt.

3. System (10) gemäß Anspruch 1, wobei die Treibstoffstabilisierungseinheit (16) stromabwärts von dem wärmeerzeugenden Teilsystem (24) liegt.

4. System (10) gemäß einem der vorhergehenden Ansprüche, wobei der Treibstoff, der an die Maschine (11) geliefert wird, sich auf einer Temperatur von größer als ungefähr 163°C (325°F) befindet.

5. System (10) gemäß einem der vorhergehenden Ansprüche, wobei der Treibstoff, der an die Maschine (14) geliefert wird, sich auf einer Temperatur von ungefähr 288°C (550°F) bis ungefähr 482°C (900°F) befindet.

6. System (10) gemäß einem der vorhergehenden Ansprüche, wobei der Treibstoff, der an die Maschine (14) geliefert wird, sich auf einer Temperatur von ungefähr 371°C (700°F) bis ungefähr 427°C (800°F) befindet.

7. System (10) gemäß einem der vorhergehenden Ansprüche, wobei das wärmeerzeugende Teilsystem (22) ausgewählt ist aus der Gruppe von wärmeerzeugenden Teilsystemen, die besteht aus einem Hochtemperaturölsystem (76), einer Kühllufteinheit (18) einer gekühlten Turbine, einer Turbinenabgaswärmerückgewinnungseinrichtung (86), einer treibstoffgekühlten Abgasdüse, einem treibstoffgekühlten Maschinengehäuse, einem treibstoffgekühlten Umweltsteuersystem-Vorkühler (70), einer Wärmepumpe (100) und einer Kombination aus den vorstehenden wärmeerzeugenden Teilsystemen.

8. System (10) gemäß Anspruch 7, wobei das Hochtemperaturölsystem (76) einen Wärmetauscher (77) aufweist, der konfiguriert ist, einen Ölstrom (73) aus einem Lager und/oder einer Getriebeanordnung (78) und den Treibstoff von der Treibstoffstabilisierungseinheit (16) aufzunehmen, wobei der Wärmetauscher (77) konfiguriert ist, die Übertragung von Wärme von dem Ölstrom (73) auf den Treibstoff zu bewirken.

9. System (10) gemäß Anspruch 7 oder 8, wobei die Kühllufteinheit (80) der gekühlten Turbine einen Wärmetauscher (82) aufweist, der konfiguriert ist, einen Luftstrom von der Maschine (14) und den Treibstoff von der Treibstoffstabilisierungseinheit (16) aufzunehmen, wobei der Wärmetauscher (82) konfiguriert ist, die Übertragung von Wärme von dem Luftstrom auf den Treibstoff zu bewirken.

10. System (10) gemäß Anspruch 7, 8 oder 9, wobei die Turbinenabgaswärmerückgewinnungseinrlchtung (86) einen Wärmetauscher (88) aufweist, der konfiguriert ist, einen Luftstrom, der von einer Turblne (34) der Maschine (14) ausgestoßen wird, und den Treibstoff von der Treibstoffstabilisierungseinheit (16) aufzunehmen, wobei der Wärmetauscher (88) konfiguriert ist, die Übertragung von Wärme von dem Luftstrom, der von der Turbine (34) ausgestoßen wurde, auf den Treibstoff zu bewirken.

11. System (10) gemäß einem der vorhergehenden Ansprüche, wobei die Gasturbinenmaschine (14) in ein Luftfahrzeug eingebaut ist.

12. System (10) gemäß einem der vorhergehenden Ansprüche, weiter aufweisend Ablenkbleche (52), die in den Kanälen (31) angeordnet sind, um die Mischung von Treibstoff in der Strömungsplatte (27) zu unterstützen.

13. System gemäß Anspruch 12, wobei das Mischen von Treibstoff in einem turbulenten Strömungsregime bewirkt wird.

14. System gemäß Anspruch 12, wobei das Mischen von Treibstoff in einem laminaren Strömungsregime bewirkt wird.

15. System gemäß einem der vorhergehenden Ansprüche, wobei die Membran (42) eine Fluorpolymerbeschichtung aufweist, die auf einer porösen Unterschicht angeordnet ist,

16. System gemäß einem der vorhergehenden Ansprüche, weiter aufweisend einen porösen Träger (39), der in einem Grenzflächenkontakt mit der Membran (42) angeordnet ist.

17. System (10) gemäß einem der vorhergehenden Ansprüche, weiter aufweisend einen wahlweise aktivierbaren Treibstoffbypass (23), der um das wärmeerzeugende Teilsystem (20, 22, 24) herum angeordnet ist, wobei der wahlweise aktivierbare Treibstoffbypass (23) konfiguriert ist, den Bypass von Treibstoff um das wärmeerzeugende Teilsystem (20, 22, 24) herum zu bewirken.

18. System (10) gemäß einem der Ansprüche 7 bis 10, wobei der treibstoffgekühlte Umweltsteuersystem-Vorkühler (70) aufweist, einen Wärmetauscher (72), der konfiguriert ist, einen Luftstrom von der Luftfahrzeugmaschine (14) und den Treibstoff von der Treibstoffstabilisierungseinheit (16) aufzunehmen, wobei der Wärmetauscher (72) konfiguriert ist, die Übertragung von Wärme von dem Luftstrom auf den Treibstoff zu bewirken.

19. System (10) gemäß einem der Ansprüche 7 bis 10 oder 18, wobei die Wärmepumpe (100) konfiguriert ist, Wärme von einer Niedertemperaturquelle (24) auf den Treibstoff aus der Treibstoffstabilisierungseinheit (16) zu übertragen.

20. System (10) gemäß einem der Ansprüche 7 bis 10, 18 oder 19, wobei das treibstoffgekühlte Maschinengehäuse eine Einrichtung, die in Kommunikation mit dem Maschinengehäuse angeordnet ist, um Wärme auf den Treibstoff zu übertragen, aufweist, wobei die Einrichtung aus der Gruppe von Einrichtungen ausgewählt ist, die besteht aus Treibstoffwärmetauschern, Kühlschlangen, und Kühlmänteln.

21. System (10) gemäß einem der Ansprüche 7 bis 10, 18, 19 oder 20, wobei die treibstoffgekühlte Abgasdüse eine Einrichtung aufweist, die in Verbindung mit der Abgasdüse angeordnet ist, um Wärme auf den Treibstoff zu übertragen, wobei die Einrichtung aus der Gruppe von Einrichtungen ausgewählt ist, die besteht aus Treibstoffwärmetauschern, Kühlschlangen und Kühlmänteln.

22. System (10) gemäß einem der vorhergehenden Ansprüche, weiter aufweisend einen Vorwärmer (13), der konfiguriert ist, Treibstoff, der an die Treibstoffstabilisierungseinheit (16) gespeist wird, zu wärmen.

23. Verfahren des Managens von Wärmeübertragung in einem Luftfahrzeug, wobei das Verfahren aufweist:
Verwenden einer Treibstoffstabilisierungseinheit (16), um Sauerstoff aus einem Trelbstoffstrom, der an eine Maschine (14) gespeist wird, die verwendet wird, um das Luftfahrzeug anzutreiben, zu entfernen, wobei die Treibstoffstabilisierungseinheit (16) aufweist,
eine Strömungsplatte (27) mit Kanälen (31), die in einer ebenflächigen Struktur davon angeordnet sind, wobei die Kanäle (31) konfiguriert sind, um einen Treibstoffstrom aufzunehmen, und
eine Membran (42), die in einem Grenzflächenkontakt mit der Strö- mungsplatte (27) angeordnet ist, wobei die Membran (42) konfiguriert ist, einen Sauerstoffstrom aufzunehmen, der durch sie aus dem Treibstoff ge- zogen wird;
Übertragen von Wärme von einem wärmeerzeugenden Teilsystem (20, 22, 24) des Luftfahrzeug auf den Treibstoff; und
Verbrennen des Treibstoffs.

24. Verfahren gemäß Anspruch 23, wobei das Entfernen von Sauerstoff aus dem Strom von Treibstoff aufweist
Richten des Treibstoffs auf eine Oberfläche der Membran (42), wobei die Membran eine permeable Membran ist,
Anwenden eines Vakuums über der permeablen Membran (42), um einen partiellen Druckunterschied zu erzeugen, und
Bewirken, dass diffundierter Sauerstoff, der in dem Treibstoff gelöst ist, durch die permeable Membran (42) wandert.

25. Verfahren der Ansprüche 23 oder 24, wobei das Übertragen von Wärme aufweist
Aufnehmen eines komprimierten Luftstroms von einem Kompressor (30) der Maschine (14) in einem Wärmetauscher (72, 82), und
Aufnehmen des Treibstoffs in dem Wärmetauscher (72, 82) derart, dass Wärme von dem komprimierten Luftstrom auf den Treibstoff übertragen wird.

26. Verfahren gemäß Anspruch 25, weiter aufweisend Richten des komprimierten Luftstroms von dem Wärmetauscher (72) auf eine Kabine (74) des Luftfahrzeugs.

27. Verfahren gemäß Anspruch 25, weiter aufweisend Richten des komprimierten Luftstroms von dem Wärmetauscher (82) auf eine Turbine (34) der Maschine (14).

28. Verfahren gemäß Anspruch 23 oder 24, wobei das Übertragen von Wärme aufweist
Aufnehmen eines Luftstroms von einer Turbine (34) der Maschine (14) in einem Wärmetauscher (88), und
Aufnehmen des Treibstoffs in dem Wärmetauscher (88) derart, dass Wärme von dem Luftstrom von der Turbine (34) auf den Treibstoff übertragen wird.

29. Verfahren gemäß Anspruch 23, wobei das Übertragen von Wärme aufweist
Aufnehmen eines Hochtemperaturölstroms (73) von einem Hochtemperaturölsystem (78) in einem Wärmetauscher (77), und
Aufnehmen des Treibstoffs in dem Wärmetauscher (77) derart, dass Wärme von dem Hochtemperaturölsystem (78) auf den Treibstoff übertragen wird.

30. Verfahren gemäß Anspruch 29, wobei das Hochtemperaturölsystem (78) ein Lager und/oder eine Getriebeanordnung ist.

31. Verfahren gemäß einem der Ansprüche 23 bis 30, wobei das Verbrennen des Treibstoffs aufweist
Erwärmen des Treibstoffs auf wenigstens 288°C (550°F),
Einspritzen des erwärmten Treibstoffs in die Maschine (14) durch eine Treibstoffeinspritzdüse (36), und
Zünden des erwärmten Treibstoffs.

32. Verfahren gemäß einem der Ansprüche 23 bis 31, wobei das Verbrennen des Treibstoffs aufweist
Erwärmen des Treibstoffs auf ungefähr 288°C (550°F) bis ungefähr 482°C (900°F),
Einspritzen des erwärmten Treibstoffs in die Maschine (14) durch eine Treibstoffeinspritzdüse (36), und
Zünden des erwärmten Treibstoffs.

33. Verfahren gemäß einem der Ansprüche 23 bis 32, wobei das Verbrennen des Treibstoffs aufweist
Erwärmen des Treibstoffs auf ungefähr 371°C (700°F) bis ungefähr 427°C (800°F),
Einspritzen des erwärmten Treibstoffs in die Maschine (14) durch eine Treibstoffeinspritzdüse (36), und
Zünden des erwärmten Treibstoffs.

34. Verfahren gemäß einem der Ansprüche 23 bis 33, weiter aufweisend Vorwärmen des Treibstoffstroms vor dem Entfernen von Sauerstoff aus dem Treibstoffstrom.

## Revendications

1. Système (10) de gestion du transfert thermique dans un moteur à turbine à gaz (14), ledit système (10) comprenant :
un sous-système générateur de chaleur (20, 22, 24) disposé en communication fonctionnelle avec ledit moteur (14) ;
une source de combustible (18) configurée pour alimenter un combustible ;
une unité de stabilisation de combustible (16) configurée pour recevoir ledit combustible de ladite source de combustible (18) et pour alimenter ledit combustible audit moteur (14) ; et
un échangeur de chaleur (72, 77, 82, 88, 96, 98) disposé en communication thermique avec ledit combustible pour réaliser le transfert de chaleur dudit sous-système générateur de chaleur (22) audit combustible ;
**caractérisé en ce que** ladite unité de stabilisation de combustible (16) comprend,
une calandre (27) dotée de canaux (31) disposés dans la structure planaire de celle-ci, lesdits canaux (31) étant configurés pour permettre un écoulement dudit combustible, et
une membrane (42) disposée en contact interfacial avec ladite calandre (27), ladite membrane (42) étant configurée pour recevoir un écoulement d'oxygène extrait dudit combustible à travers celle-ci.

2. Système (10) selon la revendication 1, dont ladite unité de stabilisation de combustible (16) est située en amont dudit sous-système générateur de chaleur (20, 22).

3. Système (10) selon la revendication 1, dont ladite unité de stabilisation de combustible (16) est située en aval dudit sous-système générateur de chaleur (24).

4. Système (10) selon l'une quelconque des revendications précédentes, dont ledit combustible alimenté audit moteur (14) est à une température supérieure à environ 163° C (325 degrés F).

5. Système (10) selon l'une quelconque des revendications précédentes, dont ledit combustible alimenté audit moteur (14) est à une température comprise entre environ 288° C (550 degrés F) et environ 482° C (900 degrés F).

6. Système (10) selon l'une quelconque des revendications précédentes, dont ledit combustible alimenté audit moteur (14) est à une température comprise entre environ 371° C (700 degrés F) et environ 427° C (800 degrés F).

7. Système (10) selon l'une quelconque des revendications précédentes, dont ledit sous-système générateur de chaleur (22) est sélectionné dans le groupe des sous-systèmes générateurs de chaleur comprenant un circuit d'huile à haute température (76), une unité à air de refroidissement de turbine refroidie (80), un récupérateur d'échappement de turbine (86), une tuyère d'échappement refroidie par le combustible, un carter moteur refroidi par le combustible, un pré-refroidisseur de système de conditionnement d'air refroidi par le combustible (70), une pompe à chaleur (100), et des combinaisons des sous-systèmes générateurs de chaleur précités.

8. Système (10) selon la revendication 7, dont ledit circuit d'huile à haute température (76) comprend un échangeur de chaleur (77) configuré pour recevoir un écoulement d'huile (73) provenant d'un agencement de roulements et/ou d'engrenages (78) et ledit combustible de ladite unité de stabilisation de combustible (16), ledit échangeur de chaleur (77) étant configuré pour réaliser le transfert de chaleur dudit écoulement d'huile (73) audit combustible.

9. Système (10) selon les revendications 7 ou 8, dont ladite unité à air de refroidissement de turbine refroidie (80) comprend un échangeur de chaleur (82) configuré pour recevoir un écoulement d'air provenant dudit moteur (14) et ledit combustible de ladite unité de stabilisation de combustible (16), ledit échangeur de chaleur (82) étant configuré pour réaliser le transfert de chaleur dudit écoulement d'air audit combustible.

10. Système (10) selon les revendications 7, 8 ou 9, dont ledit récupérateur d'échappement de turbine (86) comprend un échangeur de chaleur (88) configuré pour recevoir un écoulement d'air d'échappement d'une turbine (34) dudit moteur (14) et ledit combustible de ladite unité de stabilisation de combustible (16), ledit échangeur de chaleur (88) étant configuré pour réaliser le transfert de chaleur dudit écoulement d'air d'échappement de ladite turbine (34) audit combustible.

11. Système (10) selon l'une quelconque des revendications précédentes, dont ledit moteur à turbine à gaz (14) est intégré à un aéronef.

12. Système (10) selon l'une quelconque des revendications précédentes, comprenant en outre des chicanes (52) disposées dans lesdits canaux (31) pour faciliter le mélange du combustible dans ladite calandre (27).

13. Système selon la revendication 12, dans lequel le mélange du combustible est réalisé dans un régime d'écoulement turbulent.

14. Système selon la revendication 12, dans lequel ledit mélange du combustible est réalisé dans un régime d'écoulement laminaire.

15. Système selon l'une quelconque des revendications précédentes, dont ladite membrane (42) comprend un revêtement fluoropolymère disposé sur une couche poreuse de support.

16. Système selon l'une quelconque des revendications précédentes, comprenant en outre un substrat poreux (39) disposé en contact interfacial avec ladite membrane (42).

17. Système (10) selon l'une quelconque des revendications précédentes, comprenant en outre une dérivation de combustible commandée sélectivement (23) disposée autour dudit sous-système générateur de chaleur (20, 22, 24), ladite dérivation de combustible commandée sélectivement (23) étant configurée pour réaliser la dérivation du combustible de manière à ce que celui-ci contourne ledit sous-système générateur de chaleur (20, 22, 24).

18. Système (10) selon l'une quelconque des revendications 7 à 10, dont ledit pré-refroidisseur de système de conditionnement d'air refroidi par le combustible (70) comprend un échangeur de chaleur (72) configuré pour recevoir un écoulement d'air d'échappement provenant dudit moteur (14) d'aéronef et ledit combustible de ladite unité de stabilisation de combustible (16), ledit échangeur de chaleur (72) étant configuré pour réaliser le transfert de chaleur dudit écoulement d'air audit combustible.

19. Système (10) selon l'une quelconque des revendications 7 à 10 ou 18, dont ladite pompe à chaleur (100) est configurée pour transférer la chaleur d'une source de basse température (24) audit combustible de ladite unité de stabilisation de combustible (16).

20. Système (10) selon l'une quelconque des revendications 7 à 10 ou 18 ou 19, dont ledit carter moteur refroidi par le combustible comprend un dispositif disposé en communication avec ledit carter moteur pour transférer la chaleur audit combustible, ledit dispositif de transfert étant sélectionné dans le groupe de dispositifs comprenant les échangeurs de chaleur, les serpentins et les chemises pour circuits de combustible.

21. Système (10) selon l'une quelconque des revendications 7 à 10 ou 18 ou 19 ou 20, dont ladite tuyère d'échappement refroidie par le combustible comprend un dispositif disposé en communication avec ladite tuyère d'échappement pour transférer la chaleur audit combustible, ledit dispositif de transfert étant sélectionné dans le groupe de dispositifs comprenant les échangeurs de chaleur, les serpentins et les chemises pour circuits de combustible.

22. Système (10) selon l'une quelconque des revendications précédentes, comprenant en outre un préchauffage (13) configuré pour chauffer ledit combustible alimenté à ladite unité de stabilisation de combustible (16).

23. Procédé de gestion du transfert thermique dans un aéronef, ledit procédé comprenant :
l'emploi d'une unité de stabilisation de combustible (16) pour extraire l'oxygène d'un écoulement de combustible alimenté à un moteur (14) utilisé pour propulser ledit aéronef, ladite unité de stabilisation de combustible (16) comprenant ;
une calandre (27) dotée de canaux (31) disposés dans la structure planaire de celle-ci, lesdits canaux (31) étant configurés pour permettre un écoulement dudit combustible, et
une membrane (42) disposée en contact interfacial avec ladite calandre (27), ladite membrane (42) étant configurée pour recevoir un écoulement d'oxygène extrait dudit combustible à travers celle-ci ;
le transfert de chaleur d'un sous-système générateur de chaleur (20, 22, 24) dudit aéronef audit combustible ; et
la combustion dudit combustible.

24. Procédé selon la revendication 23, dont l'extraction de l'oxygène dudit écoulement dudit combustible comprend,
diriger ledit combustible vers une surface de ladite membrane (42), ladite membrane étant une membrane perméable,
appliquer une dépression à travers ladite membrane perméable (42) pour créer une différence partielle de pression, et
causer la migration de l'oxygène diffus qui était présent dans ledit combustible à travers ladite membrane perméable (42).

25. Procédé selon les revendications 23 ou 24, dont ledit transfert de chaleur comprend,
recevoir un écoulement d'air comprimé provenant d'un compresseur (30) dudit moteur (14) dans un échangeur de chaleur (72, 82), et
recevoir ledit combustible dans ledit échangeur de chaleur (72, 82) pour que la chaleur soit transférée dudit écoulement d'air comprimé audit combustible.

26. Procédé selon la revendication 25, comprenant en outre l'action de diriger ledit écoulement d'air comprimé dudit échangeur de chaleur (72) à une cabine (74) dudit aéronef.

27. Procédé selon la revendication 25, comprenant en outre l'action de diriger ledit écoulement d'air comprimé dudit échangeur de chaleur (82) à une turbine (34) dudit moteur (14).

28. Procédé selon les revendications 23 ou 24, dont le transfert de chaleur comprend,
recevoir un écoulement d'air d'une turbine (34) dudit moteur (14) dans un échangeur de chaleur (88), et
recevoir ledit combustible dans ledit échangeur de chaleur (88) pour que la chaleur soit transférée dudit écoulement d'air de ladite turbine (34) audit combustible.

29. Procédé selon la revendication 23, dont le transfert de chaleur comprend,
recevoir un écoulement d'huile à haute température (73) provenant d'un circuit d'huile à haute température (78) dans un échangeur de chaleur (77), et
recevoir ledit combustible dans ledit échangeur de chaleur (77) pour que la chaleur soit transférée dudit circuit d'huile à haute température (78) audit combustible.

30. Procédé selon la revendication 29, dont le circuit d'huile à haute température (78) est associé à un agencement de roulements et/ou d'engrenages.

31. Procédé selon l'une quelconque des revendications 23 à 30, dont la combustion dudit combustible comprend,
chauffer ledit combustible à au moins 288° C (550 degrés F),
injecter ledit combustible chauffé dans ledit moteur (14) au moyen d'une buse d'injection de combustible (36), et
causer l'inflammation dudit combustible chauffé.

32. Procédé selon l'une quelconque des revendications 23 à 31, dont la combustion dudit combustible comprend,
chauffer ledit combustible à une température comprise entre environ 288° C (550 degrés F) et environ 482° C (900 degrés F),
injecter ledit combustible chauffé dans ledit moteur (14) au moyen d'une buse d'injection de combustible (36), et
causer l'inflammation dudit combustible chauffé.

33. Procédé selon l'une quelconque des revendications 23 à 32, dont la combustion dudit combustible comprend,
chauffer ledit combustible à une température comprise entre environ 371° C (700 degrés F) et environ 427° C (800 degrés F),
injecter ledit combustible chauffé dans ledit moteur (14) au moyen d'une buse d'injection de combustible (36), et
causer l'inflammation dudit combustible chauffé.

34. Procédé selon l'une quelconque des revendications 23 à 33, comprenant en outre le préchauffage dudit écoulement de combustible avant ladite extraction de l'oxygène dudit écoulement de combustible.
